Europäisches Patentamt

European Patent Office

Office européen des brevets

(19)

(11) Numéro de publication: **0 194 177 B1**

(12) **FASCICULE DE BREVET EUROPEEN**

(45) Date de publication du fascicule du brevet:
04.01.89

(51) Int. Cl.⁴: **H04M 19/00**

(21) Numéro de dépôt: 86400297.7

(22) Date de dépôt: **11.02.86**

(54) **Circuit d'interface de ligne d'abonné téléphonique avec mode de veille à puissance réduite.**

(30) Priorité: 15.02.85 FR 8502249

(43) Date de publication de la demande:
10.09.86 Bulletin 86/37

(45) Mention de la délivrance du brevet:
04.01.89 Bulletin 89/1

(84) Etats contractants désignés:
DE FR GB IT NL SE

(56) Documents cités:
IEEE JOURNAL OF SOLID-STATE CIRCUITS, vol.
SC-16, no. 4, août 1981, pages 261-266, IEEE, New York,
US; D.W. AULL et al.: "A high-voltage IC for a
transformerless trunk and subscriber line interface"
IEEE JOURNAL OF SOLID-STATE CIRCUITS, vol.
SC-18, no. 3, juin 1983, pages 316-324, IEEE, New York,
US; J.M. DANNEELS et al.: "Monolithic 70 V bipolar
linedriver IC for PCM SLIC"
IBM TECHNICAL DISCLOSURE BULLETIN,
vol. 26, no. 4, septembre 1983, pages 2033-2035, New
York, US; Y. BONNET et al.: "Feeding circuit with
reduced power consumption"

(73) Titulaire: **THOMSON-CSF, 173, Boulevard Haussmann,
F-75379 Paris Cédex 08(FR)**

(72) Inventeur: **Defretin, Bruno, THOMSON-CSF
SCPI 19, avenue de Messine, F-75008 Paris(FR)**

(74) Mandataire: **Guérin, Michel et al, THOMSON-CSF
SCPI 19, avenue de Messine, F-75008 Paris(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne un circuit d'interface de ligne téléphonique d'abonné, c'est-à-dire un circuit faisant partie d'un central téléphonique et destiné à être relié à une ligne téléphonique individuelle d'abonné pour émettre des signaux sur cette ligne et recevoir des signaux de cette ligne.

Le taux d'occupation moyen d'une ligne téléphonique est d'environ 10%, ce qui signifie que pendant 90% du temps environ le circuit d'interface n'a rien d'autre à faire qu'à observer le courant sur la ligne pour détecter un éventuel décrochage du combiné. Cette observation ne demande pas une consommation d'énergie très élevée mais, de fait, les autres fonctions inutilisées du circuit restent actives et consomment de l'énergie en pure perte. Il est essentiel de réduire cette énergie au maximum pour pouvoir réduire l'encombrement des centraux téléphoniques qui comportent des milliers de ces circuits. L'encombrement est en effet imposé principalement par les nécessités de dissipation thermique de la puissance consommée dans ces nombreux circuits.

Dans les centraux actuellement conçus, le circuit d'interface relié à une ligne téléphonique est en fait composé de deux circuits intégrés, l'un assurant une fonction d'intreface proprement dite et étant alimenté sous une tension d'environ 50 volts, et l'autre assurant une certaine "intelligence", c'est-à-dire un traitement de signal; le deuxième circuit est alimenté sous 10 volts environ.

En particulier, le circuit intégré haute tension impose la tension sur la ligne et il mesure le courant alternatif et continu présent sur la ligne. Le résultat de la mesure est transmis au circuit intégré basse tension qui traite cette information et renvoie un signal de contre réaction vers le circuit haute tension. Le circuit basse tension sert par ailleurs à émettre sur la ligne des signaux et notamment les signaux de conversation.

Il y a donc en permanence une boucle de réaction entre les deux circuits. Cette boucle existe aussi lorsque le combiné est raccroché.

Pour diminuer la puissance consommée pendant les phases (90% du temps) d'observation de la ligne, on a déjà proposé de diminuer simplement les courants d'alimentation des différentes parties du circuit (IEEE JOURNAL OF SOLID-STATE CIRCUITS, vol. SC-16, no. 4, août 1981, pages 261 à 266, ou vol. SC-18, no. 3, juin 1983, pages 316 à 324), puisque les impératifs de fonctionnement ne sont pas les mêmes qu'en dehors des phases d'observation de la ligne ; en effet, en phase d'observation il n'y a pas de courant alternatif à transmettre.

Ceci permet de réduire la puissance globale consommée mais seulement dans une faible proportion.

On propose selon la présente invention de maintenir la surveillance de la ligne en cessant totalement d'alimenter 70% des fonctions du circuit haute tension, tout en conservant une capacité d'absorbtion du courant longitudinal sur la ligne, ce qui est un facteur important (on rappelle que le courant longitudinal est celui qui est induit et non transmis sur la ligne d'abonné). La surveillance de la ligne consiste à détecter un décrochage du combiné à l'autre bout de la ligne, et pour cela à mesurer le courant présent sur celle-ci (une composante de courant continu supérieure à un seuil déterminé indique le décrochage). La mesure du courant de ligne est faite dans le circuit intégré haute tension et le traitement de l'information correspondante est fait par le circuit intégré basse tension et par un microprocesseur éventuellement associé à ces deux circuits dans le central téléphonique.

Pour permettre une réduction très importante de la consommation de puissance du circuit d'interface en mode de surveillance de la ligne, on prévoit selon l'invention que ce circuit comprend:

- un premier et un second amplificateur pour transmettre des signaux différentiels sur un premier et un second conducteur de ligne d'abonné, chaque amplificateur comportant un étage d'entrée et un étage de sortie, chaque étage de sortie comportant deux transistors en montage push-pull alimentés entre un premier et un second potentiels d'alimentation communs aux deux étages de sortie, le circuit d'interface comportant en outre un moyen de mesure du courant dans la ligne et une borne pour recevoir d'un processeur un signal de mise en veille indiquant que le circuit doit se mettre en mode de veille à faible puissance consommée; le circuit comporte en outre des moyens pour:
- fixer les polarisations des transistors des étages de sortie de manière à établir entre les conducteurs de ligne reliés aux transistors des étages de sortie une différence de potentiel fixe désirée,
- déconnecter les étages d'entrée des étages de sortie,
- supprimer l'alimentation de la plupart des autres éléments du circuit mais non des transistors en montage push-pull des étages de sortie ni du circuit de mesure de courant de ligne ni des éléments de circuit nécessaires à l'établissement et à la modification du signal de mise en veille;
- l'ensemble de ces opérations étant effectuées lorsque le signal de mise en veille est reçu.

Grâce à cette disposition, on obtient les résultats suivants:

En régime d'utilisation de la ligne, les étages de sortie servent effectivement d'amplificateurs transmettant des signaux sur la ligne et absorbant le courant longitudinal éventuellement présent.

En régime de surveillance (détecté par la mesure du courant de ligne et imposé par un signal de mise en veille issu d'un processeur ayant reçu l'information de mesure du courant de ligne), les étages de sortie ne reçoivent plus de signaux d'entrée, mais ils maintiennent une différence de potentiel fixe importante entre les conducteurs de ligne (pour permettre la surveillance du décrochage du combiné). Le circuit de mesure du courant de ligne continue à fonctionner. L'absorbtion du courant longitudinal s'effectue toujours à travers les transistors en montage push-pull des étages de sortie.

Enfin, en mode de surveillance les autres éléments de circuit ne sont plus alimentés de telle sorte que la dissipation de puissance soit fortement réduite.

D'autres caractéristiques et avantages de l'invention apparaîtront à la lecture de la description détaillée qui suit et qui est faite en référence aux dessins annexés dans lesquels:

- la figure 1 représente l'architecture générale d'un circuit d'interface de ligne d'abonné,
- la figure 2 représente le circuit haute tension avec plus de détails,
- la figure 3 représente le circuit modifié selon l'invention,
- la figure 4 représente un détail du circuit d'élaboration de courants et tensions de référence,
- la figure 5 représente un détail du circuit de régulation,
- la figure 6 représente un exemple concret d'exécution des modifications des étages de sortie du circuit d'interface.

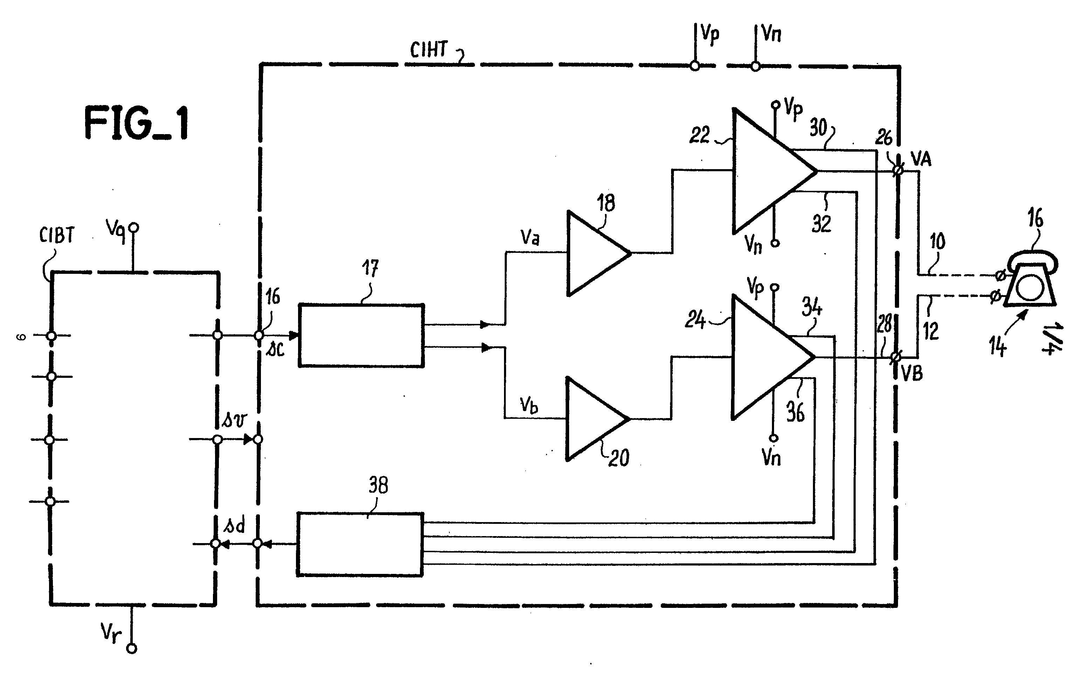

La figure 1 représente une architecture de circuit d'interface de ligne téléphonique d'abonné telle que l'on peut la concevoir aujourd'hui.

La ligne est représentée par deux conducteurs 10 et 12 reliés à un poste téléphonique d'abonné 14 pourvu normalement d'un combiné 16.

Le circuit d'interface est placé dans un central téléphonique desservant un grand nombre d'abonnés et il y a un circuit d'interface par ligne d'abonné. Les différents circuits d'interface sont gérés par des ordinateurs ou microprocesseurs non représentés.

Dans un exemple de réalisation le circuit d'interface comporte essentiellement un circuit intégré fonctionnant avec des tensions relativement élevées pouvant aller jusqu'à 150 volts par exemple et un circuit intégré fonctionnant uniquement avec des basses tensions (jusqu'à 10 volts par exemple). Le premier circuit intégré est désigné par la référence CIHT, le deuxième par la référence CIBT.

Le circuit haute tension CIHT est alimenté par un premier et un second potentiel d'alimentation Vp et Vn respectivement. Par exemple Vp = 0 volt et Vn = -48 volts.

Le circuit basse tension CIBT est alimenté entre deux potentiels Vq et Vr; par exemple Vq = +5 volt et Vr = -5 volts.

Le circuit haute tension est un circuit d'interface proprement dit: il reçoit des signaux à transmettre sur la ligne et réciproquement il reçoit de la ligne des signaux. Il a cependant d'autres fonctions mentionnées plus loin.

Le circuit basse tension est surtout un circuit de traitement de signal et de contrôle du circuit haute tension.

Sur la figure 1, on a représenté quelques éléments principaux du circuit haute tension car il sont nécessaires à la compréhension de l'invention; d'autres éléments sont bien entendus prévus mais ils n'ont pas été représentés pour ne pas gêner la compréhension de l'invention.

Une entrée 16 du circuit haute tension reçoit du circuit basse tension un signal sc (de conversation ou de sonnerie). Ce signal sc est appliqué à un circuit déphaseur 17 qui produit deux tensions Va et Vb dont la différence est proportionnelle au signal sc. Ces tensions sont transmises respectivement à deux préamplificateurs 18 et 20 dont les sorties sont reliés respectivement aux entrées d'un étage de sortie 22 et d'un étage de sortie 24. La sortie 26 de l'étage de sortie 22 est appliquée au conducteur de ligne 10 auquel elle fournit une tension VA proportionnelle à Va, tandis que la sortie 28 de l'étage de sortie 24 est appliquée au conducteur de ligne 12 auquel elle fournit une tension VB proportionnelle à Vb.

L'étage de sortie 22 et l'étage de sortie 24 sont tous deux alimentés directement entre les potentiels d'alimentation Vp et Vn.

Ces étages ont classiquement pour fonction:

- d'assurer l'application des potentiels VA et VB sur les conducteurs de ligne, en fonction des signaux Va et Vb donc en fonction du signal sc;
- d'absorber le courant longitudinal présent sur la ligne (partie de courant se présentant dans le même sens sur les deux conducteurs de ligne aux bornes de connexion 26 et 28 entre ces conducteurs et le circuit intégré haute tension);
- de permettre la mesure du courant circulant dans les conducteurs de ligne.

Pour accomplir cette dernière fonction, des fils de mesure (30 et 32 pour l'étage 22, 34 et 36 pour l'étage 24) ont été représentés; ces fils transmettent des informations sur les courants circulant dans les étages de sortie 22 et 24; ces informations sont transmises vers un circuit de mesure de courant 38 qui lui-même émet une information (signal sd) vers le circuit intégré à basse tension.

Pour ce qui intéresse plus particulièrement l'invention, on peut considérer notamment que l'information sd est une information sur le fait que le combiné est décroché ou raccroché à l'autre bout de la ligne. Cette information peut en effet être obtenue par une mesure de la composante continue éventuellement présente dans le courant transversal de ligne.

Le circuit basse tension peut notamment transmettre cette information à un microprocesseur gérant plusieurs lignes.

Le dialogue entre le microprocesseur et le circuit basse tension aboutit normalement à la production par ce dernier circuit d'un signal de mise en veille sv retransmis au circuit haute tension. Ce signal sv, lorsqu'il est présent, indique que le circuit d'interface assure simplement une fonction de surveillance de la ligne; lorsqu'il est absent, le circuit d'interface doit assurer d'autres fonctions (notamment la transmission de signaux).

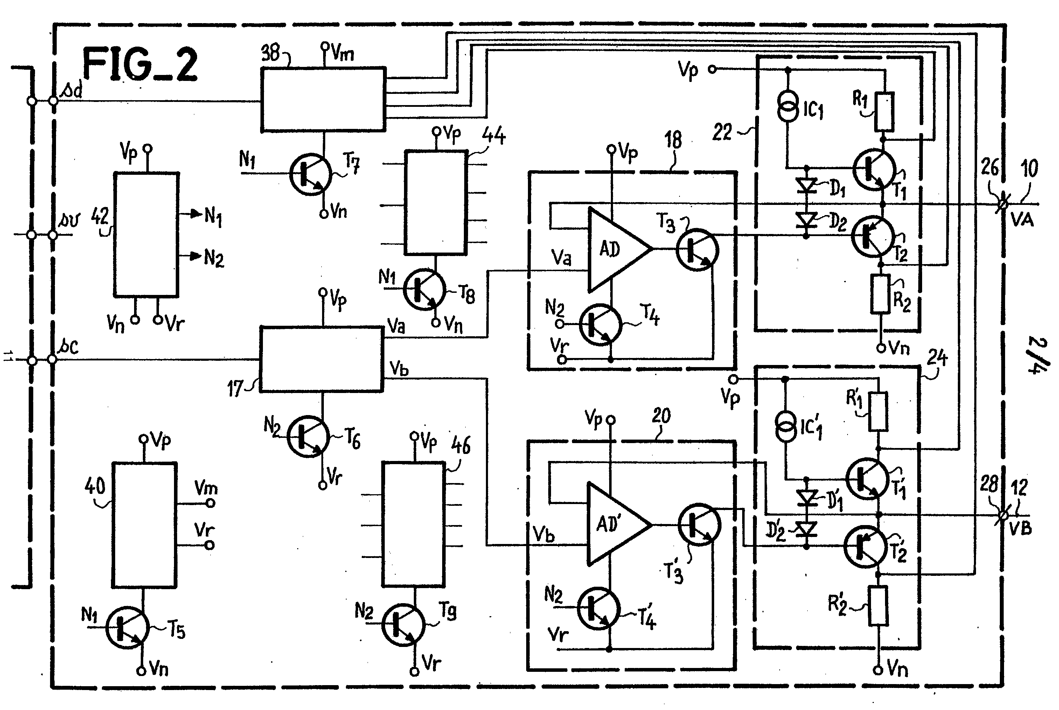

Après cet exposé général sur les fonctions du circuit d'interface, on va décrire la figure 2 qui représente avec un peu plus de détails un exemple de construction du circuit intégré haute tension. Cet exemple s'attache surtout à montrer concrètement une possibilité de réalisation des étages de sortie; il précise aussi que la plupart des fonctions du circuit sont (ou peuvent être) alimentées à travers des sources de courant; on comprendra que si ces sources de courant sont neutralisées, les fonctions correspondantes ne sont plus alimentées de sorte qu'on peut réduire la consommation de puissance du circuit en supprimant ainsi l'alimentation des fonctions inutiles en mode de surveillance.

Sur la figure 2, les éléments correspondant à ceux de la figure 1 conservent les mêmes références.

Les étages de sortie sont constitués de la manière suivante: chaque étage comprend un montage push-pull avec deux transistors (T1, T2 pour l'étage 22, T'1, T'2 pour l'étage 24).

Ce montage push-pull est connecté directement entre les bornes d'alimentation fournissant les potentiels d'alimentation Vp et Vn. Toutefois des résistances de mesure de courant R1, R2 et R'1, R'2 peuvent être insérées en série avec les collecteurs des transistors T1, T2, T'1, T'2. En variante des résistances pourraient être insérées en série avec les conducteurs de ligne eux-mêmes.

Le point de jonction des émetteurs des transistors T1 et T2 constitue la sortie (borne 26) de l'étage 22, et de même le point de jonction des émetteurs des transistors T'1 et T'2 constitue la sortie (borne 28) de l'étage 24.

La base du transistor T1 est reliée au point de jonction d'une source de courant IC1 et d'un ensemble de deux diodes en série D1, D2. Cet ensemble de deux diodes en série est connecté entre les bases des transistors T1 et T2.

La base du transistor T2 sert d'entrée à l'étage de sortie. Elle est reliée à la sortie du préamplificateur 18.

Le montage est exactement le même pour l'amplificateur 24. Des indices "prime" sont affectés aux éléments correspondants.

Les préamplificateurs 18 et 20 sont par exemple alimentés entre le potentiel Vp et un potentiel Vr stabilisé. Ce potentiel Vr est fourni par un circuit de filtrage et régulation 40 qui peut d'ailleurs aussi fournir d'autres potentiels d'alimentation tel qu'un potentiel Vm spécialement destiné au circuit de mesure de courant 38.

Pour fixer les idées, Vr peut être très proche de Vn (-46 à -48 volts par exemple); Vm peut être égal à la moitié de Vr (-23 ou -24 volts par exemple).

Le préamplificateur 18 comprend à titre d'exemple un amplificateur différentiel AD et un transistor de sortie T3.

L'amplificateur différentiel AD reçoit sur une entrée la tension Va issue du déphaseur et sur une autre entrée une contreréaction constituée par la tension de sortie VA de l'étage de sortie. La sortie de l'amplificateur différentiel AD attaque la base du transistor T3 dont l'émetteur est au potentiel Vr; le collecteur de T3 constitue la sortie du préamplificateur; enfin, l'alimentation de l'amplificateur différentiel AD entre les potentiels Vp et Vr se fait par l'intermédiaire d'une source de courant. Cette source de courant est constituée par un transistor T4 dont le potentiel d'émetteur est Vr et dont le potentiel de base est fixé à une valeur N2 par un circuit d'établissement de courants et tensions de référence 42. Ce circuit 42 est alimenté à partir des potentiels Vp, Vn et Vr et établit deux potentiels de référence N1 et N2 servant à engendrer divers courants de référence en plusieurs points du circuit.

Ainsi, une différence de potentiel de référence N2-Vr, établie suivant le principe des miroirs de courants c'est-à-dire établie à partir de la chute de tension dans une diode parcourue par un courant de référence interne à la source 42, sert à fixer à une valeur constante le courant dans la transistor T4 dont l'émetteur est au potentiel Vr, ainsi d'ailleurs que dans tous les transistors dont l'émetteur est au potentiel Vr et la base au potentiel N2.

Une autre différence de potentiel N1-Vn, établie suivant le même principe, sert à fixer le courant dans tous les transistors dont l'émetteur est relié au potentiel Vn et la base au potentiel N1.

Le montage du préamplificateur 20 est exactement le même et ne sera pas décrit. Simplement, un amplificateur différentiel AD' commande un transistor de sortie T'3 et est alimenté par une source de courant constituée par un transistor T'4 dont le potentiel de base est N2 et le potentiel d'émetteur est Vr.

Pour compléter la description de la figure 2, on précise que le circuit de filtrage qui établit la tension Vr et la tension Vm peut lui-même être alimenté à partir d'une source de courant (transistor T5) piloté par la différence de potentiel N1-Vn; le déphaseur 17 peut être alimenté par une source de courant (transistor T6) pilotée par la tension N2-Vr; le circuit de mesure de courant 38 peut être alimenté par une source de courant (transistor T7) pilotée par la tension N1-Vn. Enfin quelques autres fonctions globalement schématisées par un rectangle 44 peuvent être alimentées par une ou plusieurs sources de courant (transistor T8) pilotées par la tension N1-Vn tandis que d'autres fonctions globalement schématisées par un rectangle 46 peuvent être alimentées par une ou plusieurs sources de courant (transistor T9) pilotées par la tension N2-Vr.

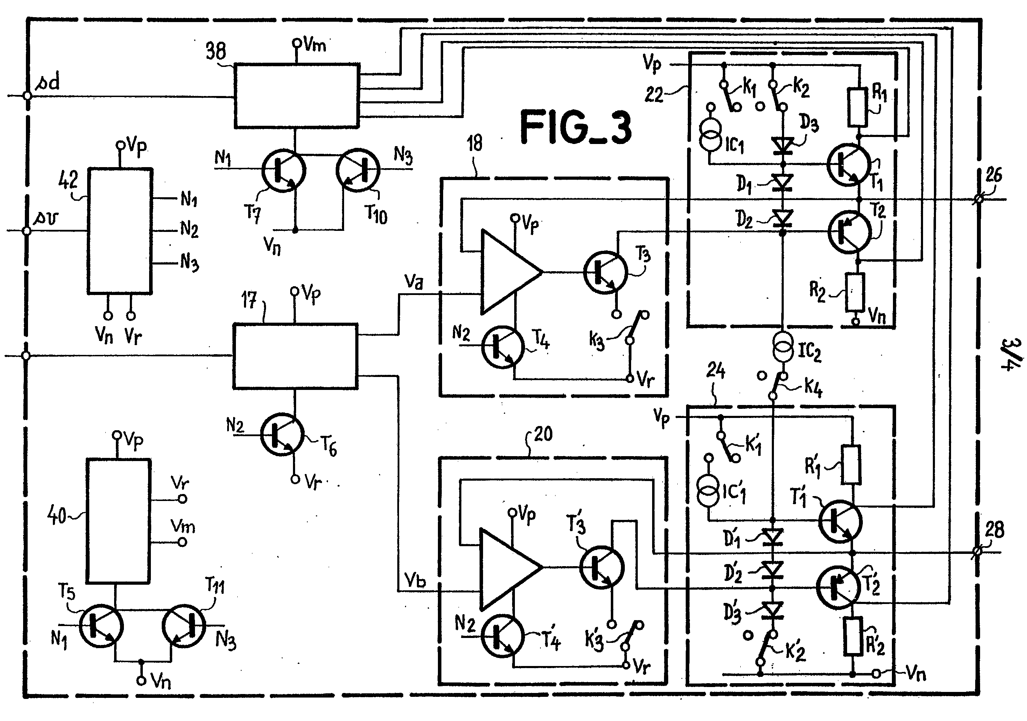

Le schéma de la figure 2 ayant ainsi été décrit on va maintenant décrire le schéma de la figure 3 qui reprend en partie les éléments de la figure 2 en y adjoignant un certain nombre d'autres éléments spécifiques de l'invention.

On comprendra que les éléments décrits à la figure 2 sont conservés dans le circuit intégré haute tension même s'ils n'apparaisent pas sur la figure 3 pour des raisons de simplification de la représentation. C'est ainsi qu'on n'a pas représenté sur la figure 3 les blocs 44 et 46. Les fonctions correspondant à ces blocs cessent normalement d'être alimentées en régime de veille.

Les éléments rajoutés ou modifiés à la figure 3 sont les suivants:

1) tout d'abord le circuit d'élaboration de tensions et courants de référence (42) établit une troisième tension N3 permettant de commander la base de plusieurs transistors supplémentaires ayant tous leur émetteur relié au potentiel Vn. On verra plus loin comment la troisième tension de commande N3 est établie uniquement pendant la présence du signal de mise en veille sv, les tensions N1-Vn et N2-Vr étant annulées ou pratiquement annulées lors de la présence de ce signal sv. Au contraire, en l'absence du signal sv c'est la tension N3-Vn qui est nulle ou pratiquement nulle tandis que les tensions N1 et N2 ont des valeurs permettant la mise en service normale des différentes sources de courant T4, T'4 et T5 à T9. Le circuit 42 est donc maintenant contrôlé par le signal sv.

2) ensuite, un transistor T10 servant de source de courant auxiliaire à substituer au transistor T7 a son collecteur relié au circuit de mesure 38 pour conserver une alimentation suffisante de ce circuit en régime de veille alors que le transistor T7 se bloque. Ce transistor T10 a sa base reliée au potentiel N3 et son émetteur relié au potentiel Vn; d'autres transistors similaires au transistor T10 pourraient être montés en d'autres points du circuit pour accomplir la même fonction d'alimentation auxiliaire.

3) un moyen est prévu pour que le circuit de filtrage 40 continue à fournir une tension Vm en régime de veille, pour le circuit de mesure. On rappelle que cette tension peut être de 24 volts en pratique. En régime normal il s'agit d'une tension filtrée, mais en régime de veille on peut admettre qu'elle ne le soit pas pour pouvoir supprimer la consommation de puissance du circuit de filtrage; mais dans ce cas il faut prévoir un moyen auxiliaire pour assurer l'établissement d'une tension Vm malgré l'absence d'alimentation du circuit de filtrage. Un moyen simple sera exposé en référence à la figure 5, mais à la figure 3 on a simplement représenté un transistor T11 (analogue au transistor T10), en parallèle avec le transistor T5, la base du transistor T11 étant commandée par le potentiel N3.

4) Modifications des étages de sortie

Les plus grosses modifications concernent les étages de sortie.

Le but de ces modifications est, on le rappelle,
- de permettre un fonctionnement normal des étages de sortie en régime normal (amplification de signaux, absorbtion du courant longitudinal sur la ligne),
- d'accomplir d'autres fonctions en régime de veille:
  . maintenir une différence de potentiel fixe relativement élevée entre les conducteurs de ligne,
  . absorber le courant longitudinal de ligne,
  . permettre une mesure du courant de ligne.
Ces buts sont réalisés de la manière suivante:

En l'absence du signal de veille sv, le montage des étages de sortie correspond exactement à celui de la figure 2.

En présence du signal de veille sv,
- on substitue une diode D3 à la source de courant IC1 de l'étage 22;
- on relie la base du transistor T2 à la base du transistor T'1 par une source de courant supplémentaire IC2;
- on déconnecte la source de courant IC'1;
- on connecte une diode D'3 entre la base du transistor T'2 et le potentiel Vn;
- on déconnecte les sorties des préamplificateurs 18 et 20 des entrées des étages terminaux 22 et 24; en pratique on bloque les transistor T3 et T'3.

La figure 3 montre par un schéma de principe simplifié comment en présence d'un signal sv (commutateurs tous tourné vers la droite) on aboutit à un schéma différent de celui qu'on obtient en l'absence du signal sv (commutateurs tous tournés vers la gauche: schéma correspondant à la figure 2).

La figure 3 a été représentée avec des commutateurs reliant ou isolant divers éléments du schémas pour accomplir les fonctions indiquées ci-dessus. Mais on comprendra que la réalisation pratique peut être tout à fait différente: par exemple une source de courant peut être constituée par un transistor et, pour interrompre le courant circulant dans le collecteur on peut soit déconnecter le collecteur, soit, ce qui est plus simple, polariser la base de telle sorte que le transistor se bloque.

Sur la figure 3, un commutateur K1 permet de mettre en service ou déconnecter la source de courant IC1; un commutateur K2 permet de mettre en service ou déconnecter la diode D3; un commutateur K3 permet d'interrompre le courant dans le transistor T3; un commutateur K4 permet de mettre en service ou déconnecter la source de courant supplémentaire IC2; des commutateurs K'1, K'2, K'3 exécutent les mêmes fonctions vis-à-vis des éléments IC'1, D'3, T'3. Les commutateurs sont tous, directement ou indirectement, commandés par le potentiel N3.

L'ensemble de ces adjonctions dans les étages de sortie 22 et 24 est destiné:

- à conserver le fonctionnement de ces étages en l'absence du signal sv,
- à transformer les étages de sortie en un générateur d'une tension différentielle fixe sur les conducteurs de ligne, cette tension étant proche de la différence Vp-Vn, ceci sans perturber les possibilités de mesure du courant de ligne et d'absorbtion du courant longitudinal.

On peut vérifier que lorsque les commutateurs sont tous tournés vers la droite (présence du signal sv), la tension sur la borne 26 est pratiquement égale à Vp diminué de deux chutes de tension de diodes en direct (D3, D1) soit environ Vp-1,2 volts. De même, la tension sur la borne 28 est pratiquement Vn+1,2 volts.

La source de courant continu IC2 sert à faire passer un courant connu dans les six diodes D1 à D3 et D'1 à D'3.

Les figures suivantes représentent des détails de réalisation du circuit de la figure 3.

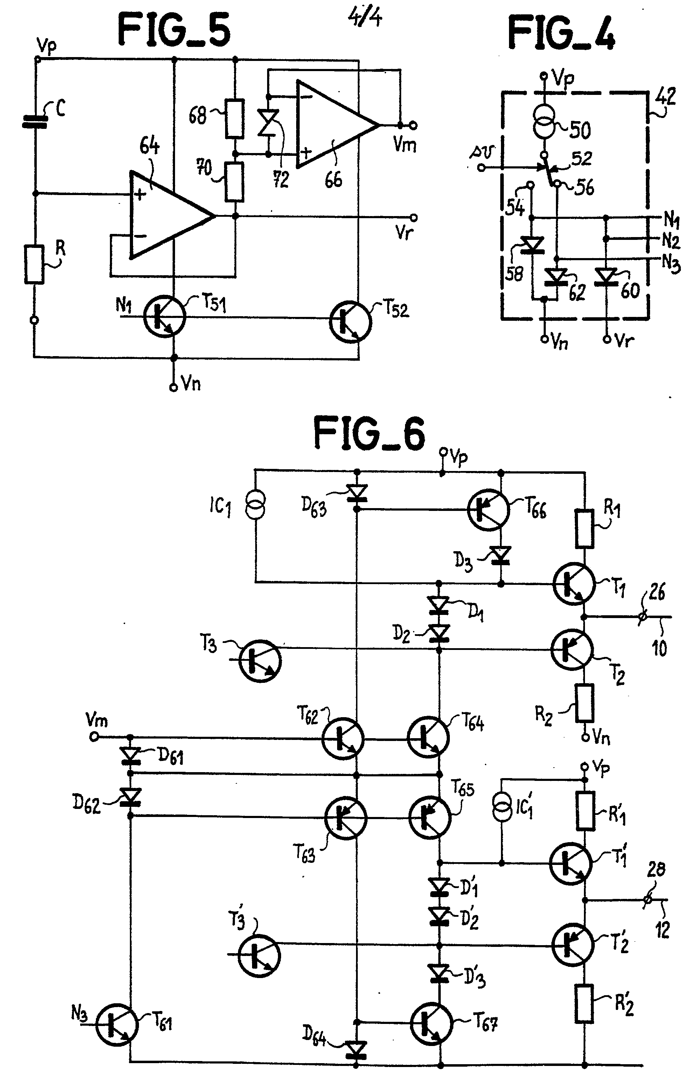

Tout d'abord la figure 4 montre comment on peut réaliser le circuit 42 d'élaboration des courants tensions de référence.

Une source de courant 50 est reliée à un commutateur 52 qui dirige le courant de la source soit vers un noeud de circuit 54 soit vers un noeud de circuit 56. Au noeud 54, le courant se divise en deux portions circulant respectivement dans une diode 58 et dans une diode 60. La diode 58 est reliée entre le noeud 54 et le potentiel Vn. La diode 60 est reliée entre le noeud 54 et le potentiel Vr issu du circuit de filtrage. Les potentiels N1 et N2 sont prélevés sur le même noeud 54 (ici N1=N2). Le commutateur 52 relie la source de courant 50 au noeud 54 en l'absence du signal de veille sv.

Au noeud 56 le courant issu de la source 50 est appliqué à une diode 62 reliée par ailleurs au potentiel Vn. Le potentiel N3 est prélevé sur le noeud 56. Le commutateur 52 relie la source de courant 50 en présence du signal de veille sv.

La figure 5 montre comment on peut réaliser le circuit de régulation 40 élaborant les tensions Vr et Vm avec un moyen pour qu'une tension Vm approximativement intermédiaire entre Vp et Vn soit élaborée même alors que le circuit de régulation n'est plus alimenté en courant par le transistor T5 (sans pour autant prévoir un transistor T11 comme à la figure 3).

Le circuit de filtrage comprend deux amplificateurs différentiels 64 et 66 alimentés entre la tension Vp et la tension Vn, l'un à travers une source de courant constituée par un transistor T51 commandé par le potentiel N1, l'autre par un transistor T52 commandé également par le potentiel N1.

L'amplificateur 64 (à gain unitaire) établit une tension Vr pratiquement égale à Vn mais filtrée grâce à son entrée reliée à un pont diviseur RC.

L'amplificateur 66, également bouclé en gain unitaire a son entrée reliée au point milieu d'un pont diviseur (résistances 68 et 70) connecté entre les potentiels Vr et Vp. La sortie de l'amplificateur établit une tension Vm correspondant au rapport de division du pont diviseur.

Une diode zener 72 est placée entre les entrées différentielles de l'amplificateur 66, c'est-à-dire entre l'entrée reliée au pont diviseur et l'entrée bouclée sur la sortie pour établir le gain unitaire. De cette manière, lorsque les transistors T51 et T52 se bloquent du fait du passage à zéro de la tension N1-Vn, les amplificateurs cessent d'être alimentés; Vm devient pratiquement égal à Vp diminué de la tension de seuil de la diode zener 72. Il subsiste donc une tension V'm pour l'alimentation du circuit de mesure de courant 38. On peut choisir V'm égale à la valeur normale de Vm.

La figure 6 représente en détails une possibilité de réalisation des étages de sortie.

Les éléments de commutation nécessaires au changement de configuration et de fonctionnement du circuit entre le mode de fonctionnement normal et le régime de veille sont constitués essentiellement par des transistors commandés indirectement à partir du potentiel N3.

Le potentiel N3, lorsqu'il est établi par le signal sv, autorise le passage d'un courant dans un ensemble de deux diodes D61 et D62 alimentées entre les potentiels Vm et Vn. Ce passage est autorisé par un transistor T61 qui sert de source de courant constant lorsque le signal sv est présent (source de courant nul lorsque sv est absent).

Le courant dans les diodes D61 et D62 est recopié par deux groupes de transistors. Les transistors T62 et T63 du premier groupe recopient ce courant et l'appliquent à deux diodes D63 et D64 reliées l'une au potentiel Vp et l'autre au potentiel Vn.

Les transistors T64 et T65 du deuxième groupe recopient également, avec la même amplitude, le courant dans les diodes D61 et D62, et appliquent le courant recopié aux diodes D1, D2, D3, D'1, D'2, D'3 en série (voir figure 3). Des transistors T66 et T67 en série avec ces diodes constituent les commutateurs K2 et K'2 de la figure 3. Ils se saturent nécessairement en présence du potentiel N3, du fait de la double recopie de courant; au contraire ils se bloquent si N3 descend au potentiel Vr en l'absence du signal de veille sv.

Enfin, on n'a pas spécifiquement prévu d'élément assurant la fonction des commutateurs K1 et K'1 car la mise en service des diodes D3 et D'3 suffit à polariser les transistors T1 et T'2 de la manière désirée en neutralisant l'influence des sources IC1 et IC'1.

**Revendications**

1. Circuit d'interface de ligne téléphonique d'abonné, composant un premier et un second amplificateurs de signaux à transmettre respectivement sur un premier (10) et un second (12) conducteur de ligne d'abonné, chaque amplificateur comportant un étage d'entrée (18, 20) et un étage de sortie (22, 24), chaque étage de sortie comportant deux transistors (T1, T2; T'1, T'2) en montage push-pull reliés à un conducteur de ligne et alimentés entre un premier (Vp) et un second (Vn) potentiels d'alimentation communs aux deux étages de sortie, le circuit d'interface comportant en outre un moyen (38, R1, R2, R'1, R'2) de mesure du courant dans la ligne et une borne pour recevoir un signal de mise en veille (sv) indiquant que le circuit doit se mettre en mode de veille à faible puissance consommée, caractérisé en ce qu'il comporte des moyens (D3, D'3, IC2, K1 à K3, K'1 à K'3, 42) pour:
- fixer les polarisations des transistors (T1, T2, T'1, T'2) des étages de sortie de manière à établir une différence de potentiel fixe entre les conducteurs de ligne reliés aux transistors des étages de sortie,
- déconnecter les étages d'entrée (18, 20) des étages de sortie (22, 24),
- supprimer l'alimentation en énergie de la plupart des autres éléments du circuit mais non des transistors en montage push-pull des étages de sortie, ni du circuit de mesure du courant de ligne,
- l'ensemble de ces opérations étant faites lorsque le signal de mise en veille est reçu.

2. Circuit d'interface de ligne téléphonique d'abonné selon la revendication 1, caractérisé en ce que les moyens pour fixer la polarisation des étages de sortie comprennent, connectés en série entre les potentiels d'alimentation, une première diode (D3) reliée entre le premier potentiel d'alimentation (Vp) et la base d'un premier transistor (T1) du premier étage de sortie, une deuxième et une troisième diode en série (D1, D2) reliées entre les bases du premier (T1) et du second (T2) transistor du premier étage de sortie, une source de courant (IC2) constant reliée entre la base du deuxième transistor (T2) du premier étage de sortie et la base du premier transistor (T'1) du deuxième étage de sortie, une quatrième et une cinquième diode en série (D'1, D'2) reliées entre les bases des transistors (T'1, T'2) du deuxième étage, et enfin une sixième diode (D'3) reliée entre la base du deuxième transistor (T'2) du deuxième étage et le deuxième potentiel d'alimentation (Vn), la source de courant (IC2) étant neutralisée en l'absence du signal de veille (sv) et la première (D3) et sixième diode (D'3) étant déconnectées par des moyens de commutation (K2, K'2; T66,
T67) en l'absence du signal de veille.

**Patentansprüche**

1. Schnittstellenschaltung für eine Teilnehmer-Telephonleitung, die einen ersten sowie einen zweiten
Verstärker für Signale bildet, welche auf einem ersten (10) bzw. einem zweiten (12) Leiter für eine Teilnehmerleitung übertragen werden müssen, wobei
jeder Verstärker eine Eingangsstufe (18, 20) sowie
eine Ausgangsstufe (22, 24) umfaßt, jede Ausgangsstufe zwei in Gegentaktschaltung geschaltete
Transistoren (T1, T2; T'1, T'2) umfaßt, welche mit einem Leitungsleiter verbunden sind und zwischen einem ersten (Vp) und einem zweiten (Vn) den beiden
Ausgangsstufen gemeinsamen Versorgungspotential versorgt werden, wobei die Schnittstelle ferner
ein Mittel (38, R1, R2, R'1, R'2) zur Strommessung in
der Leitung sowie eine Klemme umfaßt, um das Signal (sv) zur Herstellung eines Bereitschaftszustands zu empfangen, welches anzeigt, daß die
Schnittstelle sich in den Bereitschaftsmodus mit geringem Leistungsverbrauch einstellen muß, dadurch
gekennzeichnet, daß sie Mittel (D3, D'3, IC2, K'1 bis
K3, K'1 bis K'3, 42) umfaßt, um:
- die Polarisationen der Transistoren (T1, T2, T'1,
T'2) der Ausgangsstufen festzulegen, so daß ein
fester Potentialunterschied zwischen den mit den
Transistoren der Ausgangsstufen verbundenen
Leitungsleitern hergestellt wird,
- die Eingangsstufen (18, 20) von den Ausgangsstufen (22, 24) zu trennen,
- die Energieversorgung für die Mehrheit der
anderen Schaltungselemente zu unterdrücken,
aber nicht für die in Gegentakt geschalteten
Transistoren der Ausgangsstufen und für die
Schaltung zur Messung des Leitungsstromes,
- wobei die Gesamtheit dieser Maßnahmen nach
Empfang des Signals zu Herstellung eines Bereitschaftssignals erfolgt.

2. Schnittstellenschaltung für eine Teilnehmer-
Telephonleitung nach Anspruch 1, dadurch gekennzeichnet, daß die Mittel zum Festlegen der Polarisation der Ausgangsstufen in Reihe zwischen den
Versorgungspotentialen geschaltet umfassen: eine
erste Diode (D3), die zwischen das erste Versorgungspotential (Vp) und die Basis eines ersten
Transistors (T1) der ersten Ausgangsstufe geschaltet ist, eine zweite sowie eine dritte Diode (D1, D2),
die in Reihe geschaltet sind und zwischen den Basiselektroden des ersten (T1) bzw. des zweiten (T2)
Transistors der ersten Ausgangsstufe liegen, eine
Konstantstromquelle (IC2), die zwischen der Basis
des zweiten Transistors (T2) der ersten Ausgangsstufe und der Basis des ersten Transistors (T'1) der
zweiten Ausgangsstufe liegt, eine vierte sowie eine
fünfte Diode (D'1, D'2), die in Reihe geschaltet sind
und zwischen den Basiselektroden der Transistoren (T'1, T'2) der zweiten Stufe liegen, sowie schließlich eine sechste Diode (D'3), die zwischen der Basis des zweiten Transistors (T'2) der zweiten Stufe
und dem zweiten Versorgungspotential (Vn) liegt,
wobei die Stromquelle (IC2) neutralisiert wird, wenn
kein Signal (sv) zur Herstellung eines Bereitschaftszustandes vorhanden ist, und wobei die erste (D3) und die sechste Diode (D'3) über Umschaltmittel (K2, K'2; T66, T67) abgetrennt werden, wenn
kein Signal zur Herstellung eines Bereitschaftszustandes vorhanden ist.

**Claims**

1. An interface circuit for a subscriber telephone
line comprising a first and a secon signal amplifier to
transmit respectively along a first (10) and a second
(12) conductor of the subscriber line, each amplifier
comprising an input stage (18 and 20) and an output
stage (22 and 24), each output stage comprising two
transistors (T1, T2; T'1 and T'2) in a push-pull arrangement connected with a line conductor and supplied between a first (Vp) and a second (Vn) supply
potential common to two output stages, the interface
circuit comprising in addition a means (38, R1, R2, R'1
and R'2) for measuring the current on the line and a
terminal to receive a signal to cause standby operation (sv) indicating that the circuit is to be put on
standby with a low power consumption, characterized in that it comprises means (D3, D'3, IC2, K1 to
K3, K'1 to K'3 and 42) for:
- setting the polarization of the transistors (T1,
T2, T'1 and T'2) of the output stages in such a manner as to establish a fixed potential difference between the conductors of the line connected with
the transistors of the output stages,
- disconnecting the input stages (18 and 20) from
the output stages (22 and 24),
- suppressing the power supply to most of the
other elements of the circuit but not to the transistors in a push-pull arrangement of the output
stages and not to the circuit for measuring the
line current,
- the totality of these operations being performed
when the signal to start the standby state is received.

2. The interface subscriber line telephone circuit
as claimed in claim 1, characterized in that the means
to set the polarization of the output stages comprise, connected in series between the supply potentials, a first diode (D3) connected between the
first supply potential (Vp) and the base of a first
transistor (T1) of the first output stage, second and
third diodes (D1 and D2) in series connected between the bases of the first (T1) and the second (T2)
transistors of the first output stage, a source (IC2)
of constant current connected between the base of
the second (T2) of the first output stage and the
base of the first transistor (T'1) of the second output stage, a fourth and a fifth diode (D'1 and D'2) in
series connected between the bases of the transistors (T'1 and T'2) of the second stage, and lastly a
sixth diode (D'3) connected between the base of the
second transistors (T2) of the second stage and the
second supply potential (Vn), the source (IC2) being neutralized in the absence of the standby signal
(sv) and the first (D3) and the sixth diodes (D'3) being disconnected by switching means (K2, K'2; T66
and T67) in the absence of the standby signal.

# FIG_1

EP 0 194 177 B1

1/4

FIG_2

FIG_3

FIG_5

4/4

FIG_4

FIG_6